**Europäisches Patentamt**

**European Patent Office**

**Office européen des brevets**

(19)

(11) Veröffentlichungsnummer: **0 384 329**
**A1**

(12) **EUROPÄISCHE PATENTANMELDUNG**

(21) Anmeldenummer: **90103092.4**

(22) Anmeldetag: **17.02.90**

(51) Int. Cl.5: **C02F 1/52, C05F 3/00, C02F 1/38**

(30) Priorität: **21.02.89 DE 3905265**

(43) Veröffentlichungstag der Anmeldung:
**29.08.90 Patentblatt 90/35**

(84) Benannte Vertragsstaaten:
**BE DE DK FR GB NL**

(71) Anmelder: **HERMANN JOSEF KRUMME UND ELISABETH KRUMME GbR**
**Südstrasse 15-17**
**D-4424 Stadtlohn(DE)**

(72) Erfinder: **Krumme, Berhard**
**Otgeriestrasse 21**
**D-4424 Stadtlohn(DE)**

(74) Vertreter: **Türk, Gille, Hrabal**
**Brucknerstrasse 20**
**D-4000 Düsseldorf 13(DE)**

(54) Verfahren zur Veredelung von Gülle.

(57) Die Erfindung betrifft ein Verfahren zur Veredelung von Gülle durch Grobtrennung mittels Filtration (2) in einen Feststoffanteil und einen Flüssiganteil, der noch bei der Grobtrennung nicht entfernte Feststoffe enthält, und das dadurch gekennzeichnet ist, daß zu dem durch Grobtrennung erhaltenen Flüssiganteil Eisen-III-Ionen, Calcium-II-Ionen und/oer Magnesium-II-Ionen in einer solchen Menge zugegeben werden (3), daß ein Ausflocken von im Flüssiganteil enthaltenen Feststoffen erfolgt, und die ausgeflockten Feststoffe unverzüglich innerhalb von höchstens einer Minute nach Zugabe der Ionen durch Zentrifugieren (4) vom Überstand getrennt werden.

Verflockungsmittel

1. Güllegrube
2. mechanisches Pressen
3. dünnflüssige Gülle
4. Dekanter
5. Verdüsungsturm
6. Aktivkohlefilter
7. Mischer
8. Kompost
9. fester Mist

EP 0 384 329 A1

Die vorliegende Erfindung betrifft ein Verfahren zur Veredelung von Gülle, die durch Grobtrennung mittels Filtration in einen Feststoffanteil und einen Flüssiganteil aufgetrennt wurde, und wobei der noch Feststoff enthaltende Flüssiganteil aufgearbeitet wurde..

Die in der Landwirtschaft anfallende Gülle, d.h. die bei der Stalltierhaltung anfallenden flüssigen und festen Exkremente, wurde schon seit jeher in der Landwirtschaft als Dünger für die bebauten Äcker genutzt. Die in den letzten Jahre vorangetriebene Expansion der Viehhaltung hatte zur Folge, daß immer mehr Gülle bei gleichbleibender Bodenfläche anfiel, deren einzige Entsorgungsmöglichkeit das Aufbringen auf die Äcker war und ist. Diese großen Güllemengen haben unter anderem zu einer Überdüngung des Bodens geführt.

Im Boden entstehen aus den anorganischen Ammoniumverbindungen und organischen Stickstoffverbindungen durch Mikroorganismen Nitrate. Durch Auswaschung der wasserlöslichen Nitratverbindungen gelangen diese ins Grundwasser und somit auch ins Trinkwasser. Zu hohe Nitratkonzentrationen im Trinkwasser können beim Menschen zu Vergiftungserscheinungen führen, wie z.B. Hämolyse, Meth-Hb-Bildung, Met-Hb-Urie und Nierenversagen. Besonders gefährdet sind Säuglinge und Kleinkinder.

Da sich die Problematik.der Überdüngung der Böden schon seit langem abzeichnet, wurden verschiedene Versuche unternommen, die anfallende Gülle wiederaufzuarbeiten. Bei der Aufarbeiten der Gülle kommt es darauf an, daß ein preiswertes Verfahren gefunden wird und daß die Produkte verwertbar sind.

Bis jetzt wurde die Gülle, die nicht auf die Äcker gebracht wurde, einer Grobtrennung mittels Filtration in einen Feststoffanteil und einen Flüssiganteil unterworfen. Der Feststoffanteil konnte, gegebenenfalls nach Kompostierung als Trockengut verkauft werden. Der Verkauf mußte jedoch subventioniert werden, weil dieses Verfahren unwirtschaftlich ist. Der Flüssiganteil hat eine dickflüssige Konsistenz, da er ganz beträchtliche Mengen an Fest- und Schwebestoffen in zum Teil feinster Verteilung enthält. Die anfallenden Mengen dieses Flüssiganteils sind aber so groß, daß sie bei der Aufbringung auf Wiesen und Äcker sofort in das Grundwasser sickern und nur ein geringer Teil von den Pflanzen aufgenommen wird. Die Flüssiganteile können also praktisch nicht entsorgt werden, was dazu führt, daß durch gesetzliche Verordnung die Tierhaltung begrenzt wird, so daß weniger Gülle anfällt.

Versuche, die Gülle oder den bei der Grobtrennung mittels Filtration in einen Feststoffanteil und einen Flüssiganteil anfallenden Flüssiganteil durch Zentrifugieren in die festen und flüssigen Bestandteile zu trennen, schlugen fehl. Man erhielt auch mit Hilfe von Zentrifugen mit hoher Trennkraft aus dem Flüssiganteil, der bei der Grobtrennung mittels Filtration anfällt, nur einen Flüssiganteil, der immer noch dunkel gefärbt war und eine dickflüssige Konsistenz hatte.

Ziel der vorliegenden Erfindung ist es, ein Verfahren zur Verfügung zu stellen, mit dem der Flüssiganteil der Gülle, der durch Grobtrennung mittels Filtration in einen Feststoff und einen Flüssiganteil erhalten wird, aufgearbeitet wird und man einen festen Dünger erhält, der vorzugsweise möglichst frei von anorganischen Ammoniumverbindungen ist, und Wasser, das eine so gute Qualität hat, daß es auch in großen Mengen in der Nähe der erzeugenden Tierhaltungsbetriebe in den natürlichen Wasserkreislauf rückgeführt werden kann.

Bewertungsgrundlage für die Qualität des Wassers, d.h. ob es dem ntürlichen Wasserkreislauf zugeführt werden darf oder nicht, sind der BSB- und der CSB-Wert. Der BSB-Wert ist die Abkürzung für "BIOLOGISCHER SAUERSTOFFBEDARF" und ist definiert als diejenige Menge Sauerstoff, welche benötigt wird, um die im Wasser enthaltenden organischen Substanzen bei 20°C oxidativ abzubauen, der Höchstwert beträgt 40 mg/l. Der CSB-Wert ist die Abkürzung für "CHEMISCHER SAUERSTOFFBEDARF" und ist eine nach genormten Verfahren ermittelte Kenngröße für den Verschmutzungsgrad von Wässern und Abwässern. Der Höchstwert darf 150 mg/l betragen.

Der Nitratgehalt ist z.B. im Trinkwasser auf 50 mg/l beschränkt, als Richtwert gilt sogar nur 25 mg/l.

Es wurde nun gefunden, daß diese Aufgabenstellung in zumindest sehr weitgehender Weise mit dem nachfolgend beschriebenen Verfahren gelöst werden kann. Gegenstand der vorliegenden Erfindung ist demgemäß ein Verfahren zur Veredelung von Gülle durch Grobtrennung mittels Filtration in einen Feststoffanteil und einen Flüssiganteil, der noch bei der Grobtrennung nicht entfernte Feststoffe enthält, und Ausflocken von Feststoffen aus dem Flüssiganteil, das dadurch gekennzeichnet ist, daß zu dem durch Grobtrennung erhaltenen Flüssiganteil Eisen-III-Ionen, Calcium-II-Ionen und/oder Magnesium-II-Ionen in einer solchen Menge zugegeben werden, daß ein Ausflocken von im Flüssiganteil enthaltenen Feststoffen erfolgt, und die ausgeflockten Feststoffe unverzüglich innerhalb von höchstens einer Minute nach Zugabe der Ionen durch Zentrifugieren vom Überstand getrennt werden.

Die Grobtrennung mittels Filtration in einen Feststoffanteil und einen Flüssiganteil erfolgt in an sich bekannter Weise z.B. durch Abpressen der anfallenden Rohgülle, z.B. in einer Siebbandpresse. Der dabei erhaltene Flüssiganteil hat eine zähflüssige Konsistenz, ist von dunkelbrauner Farbe und von stechendem Geruch und enthält noch beträchtliche Mengen an Feststoff und zwar bis zu 50 Gew.%, bezogen auf diesen Flüssiganteil. Er kann aber auch erheblich niedriger liegen, z.B. bei bis zu 20 Gew.%. Der abgetrennte Feststoffanteil kann als solcher in an sich bekannter Weise zum Düngen verwendet werden.

Wesentliches Merkmal des Verfahrens der Erfindung ist, daß so schnell als möglich nach Zugabe der Ionen die sehr schnell ausgeflockten Feststoffe durch Zentrifugieren vom Überstand getrennt werden. Überraschenderweise läßt sich zu diesem Zeitpunkt eine technisch-wirtschaftlich vertretbare Trennung durch Zentrifugieren durchführen. Vorzugsweise wird innerhalb von höchstens 30 Sekunden nach Zugabe der Ionen durch Zentrifugieren getrennt, besonders bevorzugt nach höchstens 20 Sekunden und besonders vorteilhaft nach höchstens 10 Sekunden.

Bevorzugt erfolgt das Ausflocken mit Eisen-III-Ionen, gegebenenfalls im Gemisch mit Magnesium-II-Ionen und/oder Calcium-II-Ionen. Vorzugsweise erfolgt die Zugabe zum Flüssiganteil ohne Korrektur des pH-Wertes. Falls gewünscht, erfolgt vor Zugabe der Ionen die Einstellung des pH-Wertes des Flüssiganteiles auf mindestens 11, besonders bevorzugt mindestens 11,8. Die obere Grenze liegt vorzugsweise bei höchstens etwa 13,2.

Es ist zweckmäßig, daß der pH-Wert nicht zu hoch ist, da das Wasser, das am Ende des Verfahrens erhalten wird, sonst einen zu hohen pH-Wert hat, um es dem natürlichen Wasserkreislauf zuzuführen.

Es ist aber auch möglich, daß der pH-Wert des Flüssiganteils nach dem Abtrennen der ausgeflockten Feststoffe auf mindestens 11 eingestellt wird.

Zur Einstellung des pH-Wertes kann ein übliches Alkalihydroxyd, Erdalkalihydroxyd oder Erdalkalioxyd verwendet werden, z.B. NaOH, KOH, CaO, $Ca(OH)_2$. Die alkalische Verbindung kann in fester oder flüssiger Form zugesetzt werden, d.h. die reine Verbindung oder eine wässrige Lösung davon. Um das Volumen der Reaktionsmasse nicht zu groß werden zu lassen, ist es bevorzugt, daß die alkalische Verbindung in fester Form zugesetzt wird. Bei der Auswahl der alkalischen Verbindung sind Reaktivität und die entstehenden Kosten zu berücksichtigen. Es ist daher bevorzugt, gebrannten oder gelöschten Kalk bzw. Kalkwasser einzusetzen, da diese die preiswertesten starken alkalischen Verbindungen mit hoher Reaktivität für die Zwecke der vorliegenden Erfindung sind.

Die alkalische Verbindung wird zweckmäßig unter Rühren zugefügt. Nach Zugabe der Verbindung wird zweckmäßig noch eine ausreichende Zeit lang gerührt, um sicherzustellen, daß der gesamte Ansatz den gewünschten pH-Wert aufweist.

In der Regel reicht es, wenn nach Zugabe des Alkali noch bis zu etwa 30 Minuten gerührt wird, bis die Masse vollständig abreagiert hat und sich in der gesamten Masse ein gleichmäßiger pH-Wert eingestellt hat. Während der Reaktion kann durch das aufsteigende $NH_3$ Schaumbildung erzeugt werden, und das Gemisch wird zunehmend zäher.

Das aufsteigende $NH_3$-Gas wird in an sich bekannter Weise abgezogen und verwertet oder absorbiert. Zweckmäßig erfolgt eine Absorption mittels regenerierbarer Aktivkohlefilter. Bei Sättigung können diese Filter mit $N_2$-Gas regeneriert werden. Das desorbierte $NH_3$-Gas ist ein wichtiges Grundprodukt für die chemische Synthese und kann zur Weiterverarbeitung an die chemische Industrie abgegeben werden.

Nach Entfernen des Ammoniaks wird eine zähflüssige, dunkelbraune Masse erhalten, die sich nicht durch Zentrifugieren in die Fest- und Flüssiganteile trennen läßt. Es wurde nun überraschenderweise gefunden, daß eine Abtrennung der Feststoffe von den Flüssiganteilen in außerordentlich einfacher Weise dann durchgeführt werden kann, wenn der Masse die oben genannten Ionen zugefügt werden, und daß dann ein Ausflocken der im Flüssiganteil enthaltenen Festoffe erfolgt, und daß unverzüglich diese ausgeflockten Feststoffe durch Zentrifugieren, zweckmäßig mit einem Dekanter, abgetrennt werden. Vorzugsweise werden die Ionen in Form einer Eisensalzlösung zugegeben. Eine bevorzugte Eisensalzlösung ist eine, zweckmäßig gleichmäßig mit Wasserstoffperoxid stabilisierte Eisen-III-chloridlösung oder Eisen-III-chloridsulfatlösung. Calcium-II-Ionen und/oder Magnesium-II-Ionen werden ebenfalls zweckmäßig in Form von Lösungen von Salzen, z.B. Chloriden zugesetzt.

Es ist zweckmäßig, daß die Ionen in vorbestimmter dosierter Form mittels üblicher Regel- und Stellglieder zugeführt wird. Dies kann innerhalb einer Leitung erfolgen, die direkt zu einer Abtrennvorrichtung, z.B. der nachfolgend näher beschriebene hierfür geeigneten Zentrifuge, geführt werden.

Die Menge an Ionen, die zugegeben werden muß, um die Feststoffe auszuflocken, kann bestimmt werden, indem der Flüssigkeit eine Probe entnommen wird und definierte Mengen Ionen hinzugefügt werden, bis die Ausflockung vollständig ist. Aus der Menge der zugegebenen Ionen kann die Dosierung entsprechend eingestellt werden. Je nach Herkunft der aufzuarbeitenden Gülle werden 10 bis 30 $cm^3$ 30 %-ige (Gewicht/Volumen) Metallsalzlösung pro 10 l der Flüssigkeit aus Verfahrensschritt 1 benötigt. Die Menge soll naturgemäß so gering wie möglich sein, um eine unnötige Belastung der Umwelt zu vermeiden. Während der Ausflockung werden auch gelöste chemische Verbindungen mit ausgefällt.

Im nächsten Verfahrensschritt werden die ausgeflockten Anteile vom Überstand abgetrennt. Dazu wird die gesamte Masse, d.h. der ausgeflockte Feststoff und der Überstand, in eine Zentrifuge mit hoher Trennkraft gegeben. Als Zentrifuge kann eine übliche Zentrifuge mit hoher Trennkraft, vorzugsweise eine Vollmantel-Schneckenzentrifuge, eingesetzt werden. Dem Fachmann ist bekannt, welche Dekanter bzw. Zentrifugen für diesen Zweck geeignet sind, vgl. auch Lueger "Lexikon der Technik", Rowohlt-Verlag, Band Verfahrenstechnik, Nahrungsmitteltechnik und Haushaltstechnik 3, Stichwort "Zentrifugen", Seiten 590 bis 595. Bevorzugt werden Dekanter mit mindestens 6000 Umdrehungen pro Minute eingesetzt. Die obere Grenze wird bestimmt durch die technische Handhabung von hochtourigen Zentrifugen. In praktischer Beziehung liegt die Obergrenze bei etwa 8000 Umdrehungen pro Minute. Wesentlich für die Funktion der Abtrennung ist die kurze Reaktionszeit zwischen der Zugabe der Ionen und der Trennung in der Zentrifuge. Nach dem Abtrennen der ausgeflockten Feststoffe erhält man eine klare und gerucharme Flüssigkeit. Ist die Abtrennung nach der ersten Zentrifugierung nicht vollständig, kann die Abtrennung über zwei oder mehr in Serie geschaltete Zentrifugen erfolgen. Gegebenenfalls wird eine Tellerzentrifuge, die eine ausreichende Trennkraft hat, eingesetzt. Während des Abtrennens der ausgeflockten Anteile in der Zentrifuge wird der abgetrennte Flüssiganteil zweckmäßig schon etwas mit Sauerstoff angereichert, da dies für die weitere Verwertung des Flüssiganteils vorteilhaft ist.

Um zu überprüfen, ob eine ausreichende Ausfällung der festen Bestandteile erfolgt ist, kann dem Zentrifugat eine Probe entnommen werden, der möglichst kleine Mengen weitere Metallsalzlösung hinzugegeben werden. Wenn dieser Test ergibt, daß noch erhebliche Mengen Schwebstoffe und Trübungen im Überstand enthalten sind, ist es zweckmäßig, daß zu dem von den ausgeflockten Feststoffen abgetrennten Überstand nochmals Ionen in der durch Tests vorbestimmten Menge zugefügt werden, um diese noch vorhandenen ausflockbaren Bestandteile auszuflocken, und diese ausgeflockten Anteile werden wiederum vom Überstand abgetrennt.

Dazu kann in dieser Verfahrensstufe die nur noch geringe Mengen ausgeflockte Feststoffe aufweisende Gülle durch einen Feinfilter geleitet werden, in dem diese Restanteile an Schweb- und Feststoffen abgetrennt werden. Als Feinfilter kann ein üblicher Filter verwendet werden, der auch in Wasser- und Klärwerken zur Wasseraufbereitung eingesetzt wird. Als Filtermaterial kann ein übliches im Handel erhältliches Filterkorn (z.B. Hydroanthrazit) verwendet werden.

Die Schwebstoffe, die sich auf dem Grobfilter absetzen, werden abgezogen und können als Dünger verwert werden oder dem ersten Verfahrensschritt wieder zugesetzt werden.

Nach dem Abtrennen der ausgeflockten Feststoffe erhält man eine leicht trübe, im wesentlichen geruchlose Flüssigkeit, die keinen oder nur noch einen geringen Feststoffanteil von maximal 5 % aufweist. Die erhaltene Flüssigkeit kann mittels an sich bekannter Verfahren weiter veredelt bzw. aufbereitet werden, wie sie für die Aufbereitung von Wasser üblich sind, das geringe Verunreinigung bzw. Verfärbung aufweist. Dazu kann die Flüssigkeit in einen Entgasungs- und Belüftungsturm gegeben werden, um diese mit Sauerstoff anzureichern und so CSB- und BSB-Werte zu erhalten, die unterhalb der zulässigen Höchstgrenze liegen. Dieser Entgasungs- und Belüftungsturm kann ein in der Abwasseraufbereitung üblicher Belüftungsturm sein, in den die zu belüftende Flüssigkeit oben eingeleitet wird. Von unten wird sauerstoffhaltiges Gas eingeleitet. Nach oben abgeschlossen ist dieser Turm zweckmäßig durch ein Edelstahlnetz, das für Gas durchlässig, für Wasser aber undurchlässig ist.

Aus diesem Verfahrensschritt erhält man eine geruchlose, klare Flüssigkeit, die meistens so sauber ist, daß sie in das Abwassersystem, z.B. Bäche, Flüsse und dergleichen eingeleitet werden kann. Falls es erwünscht ist, kann die Flüssigkeit aber auch zur weiteren Aufbearbeitung üblichen Verfahren unterzogen werden. Sind in er Flüssigkeit noch leichte Trübungen vorhanden, oder ist die Flüssigkeit nicht wasserklar, kann sie mittels üblicher Filter, z.B. Kohlefilter entfärbt werden. Um Wasser mit Trinkwasserqualität zu erhalten, kann das im Kohlefilter entfärbte Wasser über einen Ionenaustauscher gegeben werden, wie er in Wasseraufbereitungsanlagen üblich ist. Falls es nach der Aufbereitung des Wassers über einen Ionenaustauscher erforderlich ist, ist auch der Einsatz von Osmoseanlagen möglich.

Je nach Art der anfallenden Gülle kann aber bereits nach Abtrennen der ausgeflockten Bestandteile eine so saübere Flüssigkeit erhalten werden, daß diese den üblichen Abwassersystemen ohne Schaden zugefügt werden kann. Im Einzelfall muß dies durch entsprechende Analysen festgestellt werden, da Voraussagen allgemeiner Art nicht möglich sind, da die Gülle ein Naturprodukt ist, dessen Zusammensetzung nicht einheitlich ist.

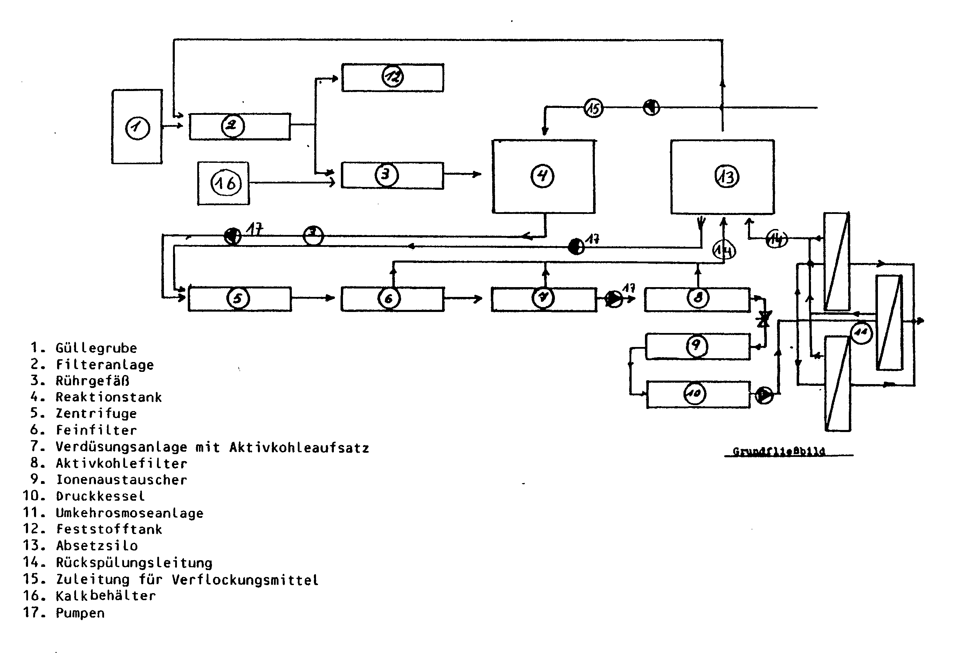

Abbildung 1 zeigt das Grundfließbild der Anlage zur Veredelung von Gülle. Aus der Güllegrube 1 wird die Gülle über eine Filteranlage 2 in die Fest- und Flüssiganteile getrennt. Der Feststoffanteil wird nach dem Filtern in den Feststofftank 12 überführt. Die Flüssiganteile gelangen in das Rührgefäß 3, in das gegebenenfalls auch die alkalische Verbindung aus Behälter 16 gegeben werden kann. Die alkalische Reaktionsmasse wird in den Reaktionstank 4 überführt unter gleichzeitiger Zuleitung des Verflockungsmittels über die Rohrleitung 15. Die ausgeflockte Masse wird vom Überstand in der Zentrifuge 5 abgetrennt, der Überstand wird gegebenenfalls zur weiteren Aufarbeitung über einen Feinfilter 6 gegeben, gegebenenfalls über eine Verdüsungsanlage mit Aktivkohleaufsatz 7 und einen Aktivkohlefilter 8 geleitet. Für die Aufarbeitung der erhaltenen Flüssigkeit zu Trinkwasser wird diese gegebenenfalls durch einen Ionenaustauscher 9 und über einen Druckkessel 10 durch eine Anlage für Umkehrosmose 11 geleitet. Die durch den Feinfilter abgetrennten Feststoffe werden über die Rückspülungsleitung 14 in einen Absetzsilo 13 geleitet und der Filteranlage 2 zugeführt. Das Überführen der Reaktionsmassen aus den einzelnen Reaktionsschritten erfolgt über Pumpen 17.

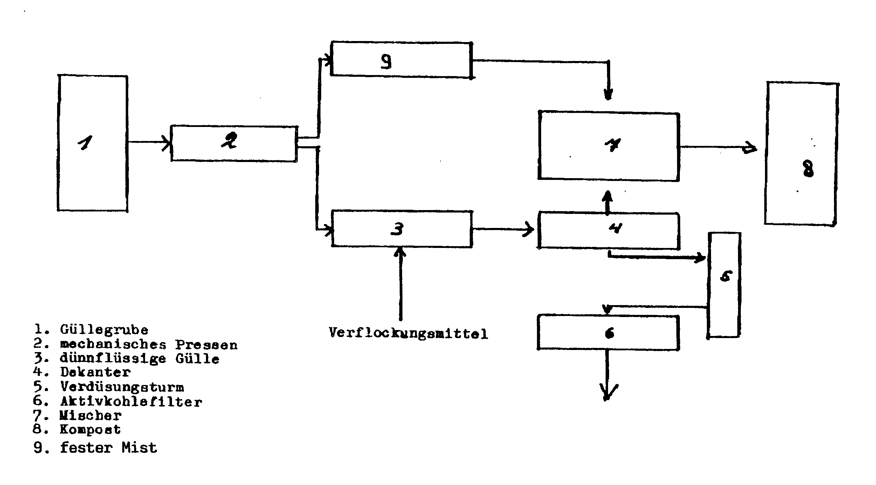

In Abbildung 2 ist ein besonders bevorzugtes Grundfließbild für das Verfahren gemäß der Erfindung dargestellt. Das Verflockungsmittel wird zu der dünnflüssigen Gülle unmittelbar vor dem Einleiten in den Dekanter, zweckmäßig zur Rohrleitung, die in den Dekanter führt, nur wenige Meter vor dem Dekanter zugegeben.

Nach dem Abtrennen der ausgeflockten Feststoffe gemäß der Erfindung kann der Überstand, d.h. die erhaltene Flüssigkeit nach sonstigen an sich bekannten Verfahren aufgearbeitet werden. Besonders bevorzugt ist es, die Ammonium-Ionen bzw. das Ammoniak durch Zusatz von Phosphorsäure und Magnesiumoxid in schwer lösliches Magnesiumammoniumphosphat zu überfuhren das ausfällt und leicht von der Flüssigkeit abgetrennt werden kann. Dieses Verfahren ist auch als MAP-Verfahren bekannt (vgl. Schulze-Rettmer, T. Yawari, Versuche mit dem Verfahren der Fällung von Magnesium-AmmoniumPhosphat aus verschiedenen Abwässern, Vom Wasser, 71, 41 - 54 (1988).

Beispiel 1

Zu 5 kg filtrierter Rohgülle werden unter Rühren 0,25 kg Brandkalk hinzugefügt. Durch aufsteigendes $NH_3$ schäumt die Masse auf, außerdem wird eine leichte, hellgraue Ausflockung beobachtet. Das Gemisch wird zäher. Nach Zugabe des Brandkalks wird noch etwa 30 Minuten gerührt, bis die Masse vollständig abreagiert hat. Die Reaktionsmasse hat einen pH-Wert von 13,2.

Die Reaktionsmasse wird über eine Rohrleitung in einen Absetzsilo geleitet, gleichzeitig werden 10 ml 30%ige (Gewicht/Volumen) Eisensalzlösung zugeführt. Der Hauptanteil der Feststoffe flockt aus, währenddessen wird ein Aufblähen der Reaktionsmasse beobachtet. Die Reaktionsmasse wird sofort in eine Zentrifuge gegeben. Die ausgeflockten Feststoffe werden vom Überstand bei 8000 Umdrehungen pro Minute getrennt. Es wird eine leicht trübe, im wesentlichen geruchlose Flüssigkeit erhalten, die einen Feststoffanteil von weniger as 5 % enthält. Zu einer 20 ml-Probe des Überstandes wird ein Tropfen der Eisenionenlösung hinzugefügt. Da keine weitere Ausfällung beobachtet wird, ist eine weitere Zugabe der Eisensalzlösung nicht notwendig.

Der Überstand wird über einen handelsüblichen Filter für Wasseraufbereitung (Hydroanthrazit) gegeben. Dadurch werden die sich noch im Überstand befindlichen Schwebstoffe entfernt. Es wird eine klare, hellgelbe, fast geruchlose Flüssigkeit erhalten.

Beispiel 2

Aus einem Güllevorratsbehälter wurde Schweinegülle in eine Siebbandpresse gepumpt. Hier wurden die Feststoffe von der Flüssigkeit abgetrennt und kompostiert. Der Flüssiganteil wurde in einen Sammelbehälter geleitet. Der Behälter wurde durch eine Rohrleitung mit einer Zentrifuge vom Typ der üblichen Milchzentrifuge verbunden. Zwischen Vorratsbehälter und Zentrifuge ist eine Förderpumpe mit einer Leistung von 4 m³/h. In die Rohrleitung, die von der Dosierpumpe zur Zentrifuge führt, ist zwei Meter vor der Zentrifuge eine Membran-Dosierpumpe eingebaut, durch die die nachfolgend beschriebene Eisen-III-Ionenlösung zudosiert werden kann.

Die Zentrifuge wird mit 8000 Umdrehungen je Minute betrieben. Es wurden 100 1 Gülleflüssigkeit innerhalb von 2 Minuten in die Zentrifuge gepumpt und durch die Dosierpumpe kontinuierlich 2 cm³ 30%ige Eisen-III-Chlorid-Sulfat-Lösung pro 1 Gülle in die Rohrleitung zugegeben. Die Flüssigkeit reagiert sofort auf das Flockungsmittel, und es erfolgte ein Aufblähen der enthaltenen Feststoffe. Durch die hohe Trennkraft der Tellerzentrifuge wurden die aufgeblähten Feststoffe bei 8000 Umdrehungen je Minute an dem rotierenden Außenmantel durch Schwerkraft abgesetzt und verfestigt. Die Wasserrückstände wurden durch die Teller nach außen in einem Sammelbehälter geleitet.

Aus 100 1 abgepreßter Gülle wurden 30 1 Überstand als schaumige stichfeste Masse zur Verwendung als Kompost mit hohem Düngewert gewonnen. Die abgetrennten 70 1 Wasser wurden in einem Aktivkohlefilter nachbehandelt. Die vorgenommene Wasseranalyse ergab einen so niedrigen BSB- und CSB-Wert, daß ein Einleiten der Flüssigkeit nach Reduzierung des Ammoniumgehaltes in Gräben und Flüsse möglich ist.

Ansprüche

1. Verfahren zur Veredelung von Gülle durch Grobtrennung mittels Filtration in einen Feststoffanteil und einen Flüssiganteil, der noch bei der Grobtrennung nicht entfernte Feststoffe enthält, und Ausflocken von Feststoffen aus dem Flüssiganteil, **dadurch gekennzeichnet**, daß zu dem durch Grobtrennung erhaltenen Flüssiganteil Eisen-III-Ionen, Calcium-II-Ionen und/oder Magnesium-II-Ionen in einer solchen Menge zugegeben werden, daß ein Ausflocken von im Flüssiganteil enthaltenen Feststoffen erfolgt, und die ausgeflockten Feststoffe unverzüglich innerhalb von höchstens einer Minute nach Zugabe der Ionen durch Zentrifugieren vom Überstand getrennt werden.

2. Verfahren nach Anspruch 1, dadurch gekennzeichnet, daß die ausgeflockten Feststoffe innerhalb von höchstens 30 Sekunden nach Zugabe der Eisen-III-Ionen, Calcium-II-Ionen und/oder Magnesium-II-Ionen durch Zentrifugieren vom Überstand getrennt werden.

3. Verfahren nach Anspruch 2, dadurch gekennzeichnet, daß die ausgeflockten Feststoffe innerhalb von höchstens 20 Sekunden, vorzugsweise höchstens 10 Sekunden nach Zugabe der Eisen-III-Ionen, Calcium-II-Ionen und/oder Magnesium-II-Ionen durch Zentrifugieren vom Überstand getrennt werden.

4. Verfahren nach einem oder mehreren der Ansprüche 1 bis 3, dadurch gekennzeichnet, daß Eisen-III-Ionen zugegeben werden.

5. Verfahren nach einem oder mehreren der Ansprüche 1 bis 3, dadurch gekennzeichnet, daß Eisen-III-Ionen gleichzeitig mit Magnesium-II-Ionen und/oder Calcium-II-Ionen zugegeben werden.

6. Verfahren nach einem oder mehreren der Ansprüche 1 bis 5, dadurch gekennzeichnet, daß der pH-Wert des Flüssiganteils vor Zugabe der Ionen auf mindestens 11 eingestellt wird.

7. Verfahren nach einem oder mehreren der Ansprüche 1 bis 5, dadurch gekennzeichnet, daß der pH-Wert des Flüssiganteils nach dem Abtrennen der ausgeflockten Feststoffe auf mindestens 11 eingestellt wird.

8. Verfahren nach einem oder mehreren der Ansprüche 1 bis 7, dadurch gekennzeichnet, daß die Eisen-III-Ionen, Calcium-II-Ionen und/oder Magnesium-II-Ionen zum durch Grobtrennung erhaltenen Flüssiganteil in einer Rohrleitung die zur Abtrennzentrifuge führt, kontinuierlich zugegeben werden.

9. Verfahren nach einem oder mehreren der Ansprüche 1 bis 8, dadurch gekennzeichnet, daß die ausgeflockten Bestandteile in einer Zentrifuge mit wenigstens 6000 Umdrehungen pro Minute abgetrennt werden.

10. Verfahren nach Anspruch 9, dadurch gekennzeichnet, daß die Abtrennung in zwei oder mehr in Serie geschalteten Zentrifugen erfolgt.

11. Verfahren nach einem oder mehreren der Ansprüche 1 bis 10, dadurch gekennzeichnet, daß zum von den ausgeflockten Feststoffen abgetrennten Überstand nochmals Eisen-III-Ionen, Calcium-II-Ionen und/oder Magnesium-II-Ionen zugefügt werden, um eventuell noch vorhandene ausflockbare Bestandteile auszuflocken, und diese ausgeflockten Bestandteile wiederum unverzüglich vom Überstand abgetrennt werden.

1. Güllegrube
2. Filteranlage
3. Rührgefäß
4. Reaktionstank
5. Zentrifuge
6. Feinfilter
7. Verdüsungsanlage mit Aktivkohleaufsatz
8. Aktivkohlefilter
9. Ionenaustauscher
10. Druckkessel
11. Umkehrosmoseanlage
12. Feststofftank
13. Absetzsilo
14. Rückspülungsleitung
15. Zuleitung für Verflockungsmittel
16. Kalkbehälter
17. Pumpen

Grundfließbild

EP 0 384 329 A1

1. Güllegrube
2. mechanisches Pressen
3. dünnflüssige Gülle
4. Dekanter
5. Verdüsungsturm
6. Aktivkohlefilter
7. Mischer
8. Kompost
9. fester Mist

Verflockungsmittel

EP 0 384 329 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-2 414 485 (BAECK ENGINEERING) * Seite 6, Ansprüche 1-3,9-11; Seite 2, Zeile 3 - Seite 3, Zeile 31 *<br>--- | 1,4-6,8 ,10 | C 02 F 1/52<br>C 05 F 3/00<br>C 02 F 1/38 |
| Y | FR-A-2 260 569 (SAINT-GOBAIN TECHNIQUES NOUVELLES) * Seite 9, Ansprüche 1-3; Seite 3, Zeile 1 - Seite 4, Zeile 33 *<br>--- | 1,4-6,8 ,10 | |
| Y | FR-A-1 574 162 (METALLGESELLSCHAFT) * Seite 7, Ansprüche 1,2,4,5,7; Seite 3, Zeilen 5-23 *<br>--- | 1,4-6,8 ,10 | |
| A | FR-A-1 381 076 (BETEILIGUNGS- UND PATENTVERWALTUNGSGESELLSCHAFT) * Titelseite, rechte Spalte, zweiter Abstaz - Seite 2, linke Spalte; Seite 2, Zusammenfassung Punkt 1 *<br>--- | 1-3,8 | |
| A | DE-A-3 540 746 (KLÖCKNER-HUMBOLDT-DEUTZ) * Spalte 1, Zeile 31 - Spalte 2, Zeile 38 *<br>----- | 1 | **RECHERCHIERTE SACHGEBIETE (Int. Cl.5)**<br><br>C 02 F<br>C 05 F |

Der vorliegende Recherchenbericht wurde für alle Patentansprüche erstellt

| Recherchenort | Abschlußdatum der Recherche | Prüfer |
|---|---|---|
| DEN HAAG | 11-05-1990 | TEPLY J. |